# NEW EUROPEAN PATENT SPECIFICATION

(11) **EP 3 563 360 B2**
(45) Date of publication and mention of the opposition decision: **03.06.2026**
(45) Mention of the grant of the patent: 09.08.2023
(21) Application number: 17828921.1
(22) Date of filing: 22.12.2017
(51) Int. Cl.: H04W 4/90, H04W 4/02, G08B 21/02

(54) **METHOD AND CONTROL UNIT FOR ENHANCED SAFETY IN AN AGRICULTURAL ENVIRONMENT**
VERFAHREN UND STEUERUNGSEINHEIT FÜR ERHÖHTE SICHERHEIT IN EINER LANDWIRTSCHAFTLICHEN UMGEBUNG
PROCÉDÉ ET UNITÉ DE COMMANDE POUR ASSURER UNE SÉCURITÉ AMÉLIORÉE DANS UN ENVIRONNEMENT AGRICOLE

(30) Priority: 30.12.2016 SE 1651756
(43) Date of publication of application: 06.11.2019
(60) Divisional application: 21198280.6
(73) Proprietor: DeLaval Holding AB, 147 21 Tumba (SE)
(72) Inventor: AXELSON, Johan, 147 21 Tumba (SE); ÖHMAN, Ulrika, 147 21 Tumba (SE)
(74) Representative: Lilliehorn, Tobias
(86) International application number: PCT/EP2017/084509
(87) International publication number: WO 2018/122199

(56) References cited:
- EP-A1- 2 719 275
- US-A1- 2008 125 908
- US-A1- 2010 026 509
- US-A1- 2016 062 345

## Description

### TECHNICAL FIELD

This document discloses a method and a system. More particularly, a method and a system are described, for enhancing security in an agricultural environment.

### BACKGROUND

In many agricultural activities, such as e.g. on dairy farms, there may be many dangerous machines with moving parts, (autonomous) vehicles, and robots. Several advanced security systems exist for preventing accidents. One example is described in document US 2016/062345 A1 which discloses techniques for making a physical area safe for a human to enter when mobile drive units are operating in the physical area. A management device sends activity commands to the mobile drive units instructing them to perform activities. If a human is detected in the physical area, the management device may stop sending activity commands.

US 2010/0026509 A1 discloses an approach warning system with a first near-field device which is associated with an object with a metal outer structure and a second near-field device which is associated with a person. The first and the second near-field devices form a transmission link for an electric near field and a warning device outputs an approach warning signal when the person with the second near-field device enters a detection region in which the near field is transmitted via a transmission link.

US 2008/0125908 A1 discloses an industrial robot system including at least one industrial robot including a manipulator and a portable operator control device. A detecting unit detects when the portable operator control device enters an area defined in the vicinity of the manipulator.

EP 2 719 275 A1 discloses a method for operation of a timber-working device to which is associated a hazard zone. The described method comprises receiving a wireless signal indicating a location of at an object tracking device. The location of the object tracking device is determined relative to the hazard zone of the timber-working device. A recommended operation of the timber-working device is determined based on the location of the object tracking device relative to the hazard zone.

Yet, it would be desired to further enhance security in agricultural environments by providing supplementary security solutions.

A recently emerging problem may be that many smart phone users, including farmers, service technicians and locum tenens working on a farm are occupied/ distracted by their smart phone, e.g. by augmented reality applications and similar captive programs and/ or games. In such situation when the user is distracted, an accident may occur more easily.

Another problem with robots and autonomously operating machines in combination with animals is that the animals may distract the farmer.

Agricultural machines may be surrounded e.g. by light grids for switching off the machine when a farmer or animal is intersecting the light beam. However, it would be desired to develop an alternative or supplementary solution for enhancing security on a farm for eliminating or at least reducing accidents caused by robots/ machines and humans on a farm.

### SUMMARY

It is therefore an object of this invention to further increase security on a farm by providing a supplementary security system.

According to a first aspect of the invention, this objective is achieved by a system in an agricultural environment. The system comprises a stationary agricultural structure comprising a moving part, which is represented by a milking parlour with a rotating platform; a locational device, associated with a human user and associated with a portable electronic device, configured to adjust a parameter of the stationary agricultural structure; a set of wireless signal receivers, configured to receive wireless signals from the locational device, the wireless signals being based on Ultra Wideband (UWB) radio technology; a control unit configured to: obtain geographical position of the locational device; and determine a distance between the geographical position of the locational device and the stationary agricultural structure; wherein the control unit is configured to: trigger an accident avoidance measure when the determined distance is smaller than a threshold limit, wherein the accident avoidance measure comprises deactivating the moving part of the stationary agricultural structure when the determined distance is smaller than the threshold limit; and pair the portable electronic device with the stationary agricultural structure when the determined distance is smaller than an additional threshold limit, thereby enabling the portable electronic device to adjust the parameter of the stationary agricultural structure.

According to a second aspect of the invention, this objective is achieved by a method in an agricultural environment. The method comprises the steps of obtaining a geographical position of a locational device, associated with a human userand associated with a portable electronic device; wherein said step of obtaining a geographic location of the locational device is determined by a locating algorithm, based on trilateration, multilateration, or triangulation of ultra wide band radio signals received by a set of wireless signal receivers, configured to receive wireless signals from the locational device. Determining a distance between the obtained geographical position of the locational device and a geographical position of a stationary agricultural structure comprising a moving part, wherein the portable electronic device is configured to adjust a parameter of the stationary agricultural structure, the stationary agricultural structure comprising the moving part being represented by a milking parlour with a rotating platform; triggering an accident avoidance measure when the determined distance is smaller than a threshold limit wherein the accident avoidance measure comprises: deactivating the moving part of the stationary agricultural structure when the determined distance is smaller than the threshold limit and pairing the portable electronic device with the stationary agricultural structure when the determined distance is smaller than an additional threshold limit, thereby enabling the portable electronic device to adjust the parameter of the stationary agricultural structure.

Thanks to the described aspects, by determining the current position of the user and continuously keep track on the distance between the user and the agricultural structure, i.e. dangerous machine, and trigger an action for avoiding an accident when the user comes too close, i.e. closer than a threshold limit, an accident may be avoided.

The disclosed solution is not disturbed by animals etc., in the barn, and security is enhanced in the agricultural environment. Thanks to the described method, accidents involving the farmer may be avoided or even completely omitted.

Other advantages and additional novel features will become apparent from the subsequent detailed description.

### FIGURES

Embodiments of the invention will now be described in further detail with reference to the accompanying figures, in which:
- **Figure 1**: illustrates an example of an agricultural environment and an accident avoidance system, according to an embodiment of the invention;
- **Figure 2**: illustrates an example of an agricultural environment and an accident avoidance system not encompassed by the claims;
- **Figure 3**: illustrates an example of an agricultural environment and an accident avoidance system, according to an embodiment of the invention;
- **Figure 4**: illustrates an example of an agricultural environment and an accident avoidance system, according to an embodiment of the invention;
- **Figure 5**: is a flow chart illustrating an embodiment of a method;
- **Figure 6**: is an illustration depicting a system according to an embodiment.

### DETAILED DESCRIPTION

Embodiments of the invention described herein are defined as a method, and a system, which may be put into practice in the embodiments described below. These embodiments may, however, be exemplified and realised in many different forms and are not to be limited to the examples set forth herein; rather, these illustrative examples of embodiments are provided so that this disclosure will be thorough and complete.

Still other objects and features may become apparent from the following detailed description, considered in conjunction with the accompanying drawings. It is to be understood, however, that the drawings are designed solely for purposes of illustration and not as a definition of the limits of the herein disclosed embodiments, for which reference is to be made to the appended claims. Further, the drawings are not necessarily drawn to scale and, unless otherwise indicated, they are merely intended to conceptually illustrate the structures and procedures described herein.

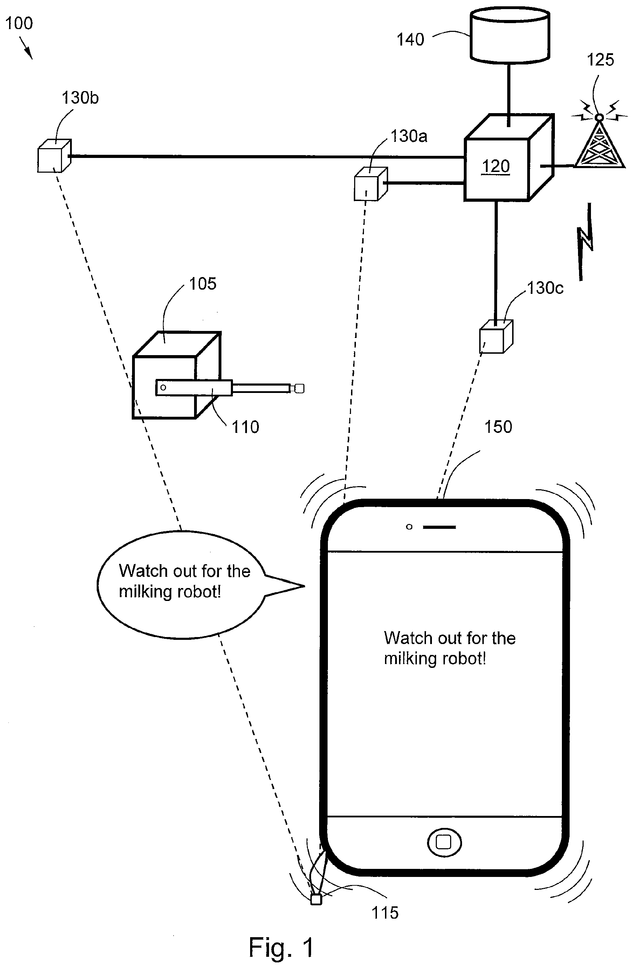

**Figure 1** illustrates a scenario at an agricultural environment **100** , such as a barn, a milking hall, a stable, etc. The agricultural environment 100 comprises an agricultural structure **105** comprising a moving part **110** . The agricultural structure 105 with the moving part 110 is a milking parlour with a rotating platform. The agricultural structure 105 is stationary .

The agricultural environment 100 also comprises an infrastructure for positioning of a locational device **115**, sometimes also referred to as a wireless tag.

The locational device 115 may comprise a transponder, such as a Radio-Frequency Identification (RFID) device in some embodiments. The transponder may comprise electronically stored information, e.g. concerning an entity associated with the locational device 115. Such transponder may be active or passive. An active transponder comprises, or is attached to, a local power source such as a battery and may operate at hundreds of meters from signal receivers **130a, 130b, 130c.** A passive transponder collect energy from a nearby signal receiver's 130a, 130b, 130c interrogating radio waves. Thereby, no local power source is required in a passive transponder.

In some embodiments, the locational device 115 may emit radio signals to be received by a plurality of signal receivers 130a, 130b, 130c, situated at known positions, i.e. fixed reference points in the agricultural environment 100. In some embodiments, four signal receivers 130a, 130b, 130c may be utilised, each positioned in a corner of the agricultural environment 100/ barn. This is however only a non-limiting example, another number of signal receivers 130a, 130b, 130c may be comprised in other embodiments.

The control unit 120 and the signal receivers 130a, 130b, 130c may form a Real-Time Locating Systems (RTLS) used to automatically identify and track the location of the locational device 115.

The emitted radio signals of the locational device 115 are based on Ultra-Wideband (UWB).

Utilising UWB technology for positioning may bring a number of advantages, such as long range and high accuracy, allowing the position of the locational device 115 to be determined to a high degree of accuracy, e.g. at centimetre level. Further, UWB radio waves may penetrate walls and other obstacles in the agricultural environment 100. In addition, UWB radio signals typically do not interfere/ disturb radio signals used for wireless communication, as the UWB transmission may be made using low transmission power. This means that other wireless communication devices may perceive the UWB signals as noise and filter it out.

A control unit **120** may then, based on trilateration, multi-lateration, or triangulation determine the current position of the locational device 115.

Some examples of multi-lateration techniques may comprise, or be based on e.g. Time Difference of Arrival (TDOA) and Received Signal Strength Indicator (RSSI) techniques. Another technique may use the Time Of Arrival (TOA), when the time of transmission and speed of propagation are known. Combining TOA data from several signal receivers 130a, 130b, 130c at different known locations TDOA can provide an estimate of position even in the absence of knowledge of the time of transmission. The Angle Of Arrival (AOA) at a signal receiver 130a, 130b, 130c can be determined by the use of a directional antenna, or by differential time of arrival at an array of antennas with known location. AOA information may be combined with distance estimates from the techniques previously described to establish the location of the locational device 115. Alternatively, the AOA at two (or more) signal receivers 130a, 130b, 130c of known location establishes the position of the locational device 115.

The position of the locational device 115 may be determined in two dimensions (2D), or three dimensions (3D) in different embodiments.

The control unit 120 may be connected to a database **140,** where information concerning location of the stationary agricultural structure 105 with the moving part 110, which may have a fixed, determined position within the agricultural environment 100, is stored. Also, one or more threshold limits may be stored in the database 140, which will be further discussed later in this document.

Further, the control unit 120 may comprise or be connected to a transceiver **125**, configured to transmit and receive wireless signals to/ from the signal receivers 130a, 130b, 130c, the database 140 and/ or a portable electronic device **150** over a wireless communication interface.

Such wireless communication interface may comprise, or at least be inspired by wireless communication technology such as Wi-Fi, Wireless Local Area Network (WLAN), Ultra Mobile Broadband (UMB), Bluetooth (BT) to name but a few possible examples of wireless communications in some embodiments. The communication may alternatively be made over a wireless interface comprising, or at least being inspired by radio access technologies such as e.g. 3GPP LTE, LTE-Advanced, E-UTRAN, UMTS, GSM, GSM/ EDGE, WCDMA, Time Division Multiple Access (TDMA) networks, Frequency Division Multiple Access (FDMA) networks, Orthogonal FDMA (OFDMA) networks, Single-Carrier FDMA (SC-FDMA) networks, Worldwide Interoperability for Microwave Access (WiMax), or Ultra Mobile Broadband (UMB), High Speed Packet Access (HSPA) Evolved Universal Terrestrial Radio Access (E-UTRA), Universal Terrestrial Radio Access (UTRA), GSM EDGE Radio Access Network (GERAN), 3GPP2 CDMA technologies, e.g., CDMA2000 1x RTT and High Rate Packet Data (HRPD), or similar, just to mention some few options, via a wireless communication network.

The communication between the control unit 120, the signal receivers 130a, 130b, 130c, the database 140, the transceiver 125 and/ or the portable electronic device 150 may alternatively be made over a wired connection.

The portable electronic device 150 may comprise e.g. a cellular mobile telephone, a stationary or portable computing device, a computer tablet, a pair of intelligent glasses, a smart contact lens, an augmented reality device, a smart watch or similar device having a user interface and wireless communication ability.

The portable electronic device 150 may belong to a human user, i.e. a farmer, service supplier, veterinarian or similar person working at, or temporarily visiting the agricultural environment 100.

The user may however be any human working on or visiting the agricultural environment 100, such as e.g. a veterinarian, agronomist, biologist, zoologist, ecologist, mammologist, domestic animal researcher or other similar human who temporarily is visiting the farm.

The locational device 115 may be associated with the human user. The locational device 115 may for example be comprised in the cloths, boots or cap of the user; be carried in a pocket, in a neck collar, operated under the skin of the user, etc.

In some embodiments, the portable electronic device 150 of the human user may also be associated with the locational device 115.

The control unit 120, based on radio signals emitted by the locational device 115, perceived by the signal receivers 130a, 130b, 130c may determine position of the locational device 115, and thereby also of the human user. The position of the agricultural structure 105 may be previously stored in the database 140. Further, the control unit 120 may determine the distance between the agricultural structure 105 and the locational device 115. This determined distance may be compared with a threshold limit (predetermined or configurable), and when the determined distance is smaller than the threshold limit an accident avoidance measure is triggered.

The accident avoidance measure may be for example to output an alert when the determined distance is smaller than the threshold limit. The alert may be outputted on the portable electronic device 150 in some embodiments, as illustrated in Figure 1, by outputting audio information, visual information and/ or tactile information. However, the alert may be outputted on another alert device, mounted in the agricultural environment 100.

The accident avoidance measure may in some embodiments comprise deactivating the moving part 110 of the agricultural structure 105 when the determined distance is smaller than the threshold limit.

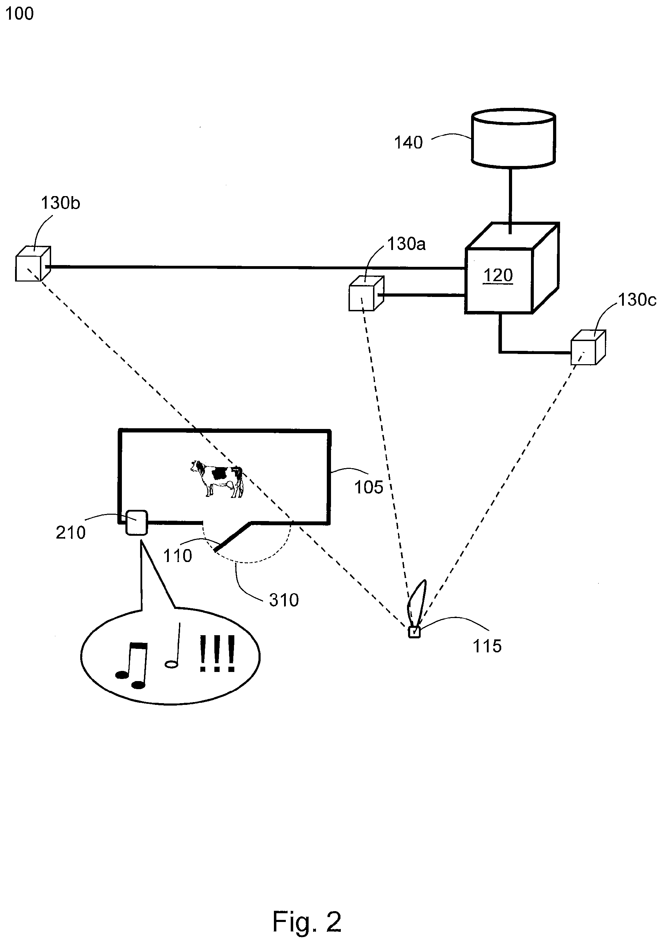

**Figure 2** illustrates anexample of an agricultural environment 100 not encompassed by the claims. The agricultural structure 105 comprises a fence and the moving part 110 may comprise a gate, which e.g. may be automatically or remotely opened/ closed. The fence may be stationary.

An alerting device **210** may be arranged in the agricultural environment 100, at or close to the agricultural structure 105 and/ or its moving part 110 according to some embodiments.

The alerting device 210 may be represented by a lamp, diode or similar configured to emit light signals and/ or flashing light signals. Alternatively, or additionally in different embodiments, the alerting device 210 may be represented by a loudspeaker, or similar entity configured to emit an audio alert, such as a sound, a tone, a spoken message, etc. Further, the alerting device 210 may comprise, or additionally comprise a haptic device for emitting tactile signals, i.e. vibrations.

As already mentioned above, the alert may also, additionally or alternatively be outputted on the portable electronic device 150 of the user, i.e. the alerting device 210 may comprise the portable electronic device 150 in some embodiments.

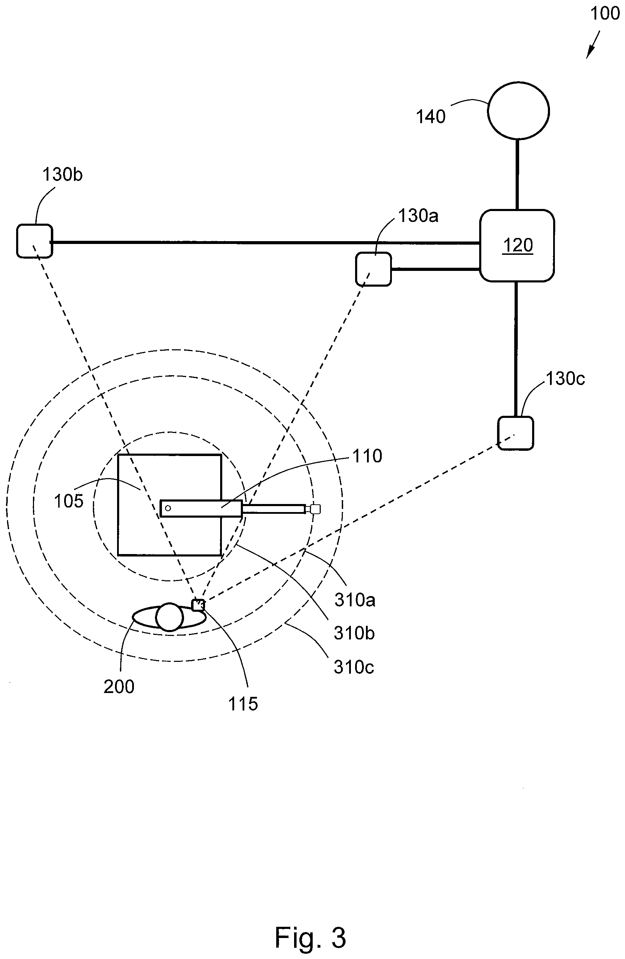

**Figure 3** illustrates yet another example of an agricultural environment 100 that is not encompassed by the claims, as regarded from above in a bird's eye view. The agricultural structure 105, which may be stationary, comprises a machine, robot or similar, and the moving part 110 may comprise a tool, an arm, etc., which e.g. may be automatically or remotely operated.

The human user **200** is carrying the locational device 115 and is moving towards the agricultural structure 105 and the moving part 110. One or several threshold limits **310** may be defined.

Thus, the current position of the human user 200 (or in fact rather the locational device 115) may be continuously surveyed, a distance between the human user 200/ locational device 115 and the agricultural structure 105 may be computed. This computed distance may then be compared with the one or more threshold limits 310.

In some embodiments, a plurality of threshold limits 310 may be applied, such as a first threshold limit 310a. When the distance between the human user 200/ locational device 115 and the agricultural structure 105 is smaller than the first threshold limit 310a, an alert may be triggered, e.g. by the alerting device 210.

Further, a second threshold limit 310b may be defined, wherein the second threshold limit 310b is smaller than the first threshold limit 310a. When the distance between the human user 200/ locational device 115 and the agricultural structure 105 is smaller than the second threshold limit 310b, the agricultural structure 105 may be deactivated.

Thereby, an increasing level of security may be applied, depending on how close the human user 200 is to the agricultural structure 105 (or the moving part 110), which is an advantage as it may be avoided to close down the agricultural structure 105/ the moving part 110 unless the human user 200 is approaching so close to the agricultural structure 105/ the moving part 110 that it becomes an acute dangerous situation.

Further, more threshold limits 310 may be applied, which may trigger alerts with increasing intensity/ sound.

In some cases, the human user 200 may utilise the portable electronic device 150 for communicating with and perform various operations on the agricultural structure 105/ the moving part 110. An advantage therewith is that a separate command panel of the agricultural structure 105 may be omitted, which saves resources.

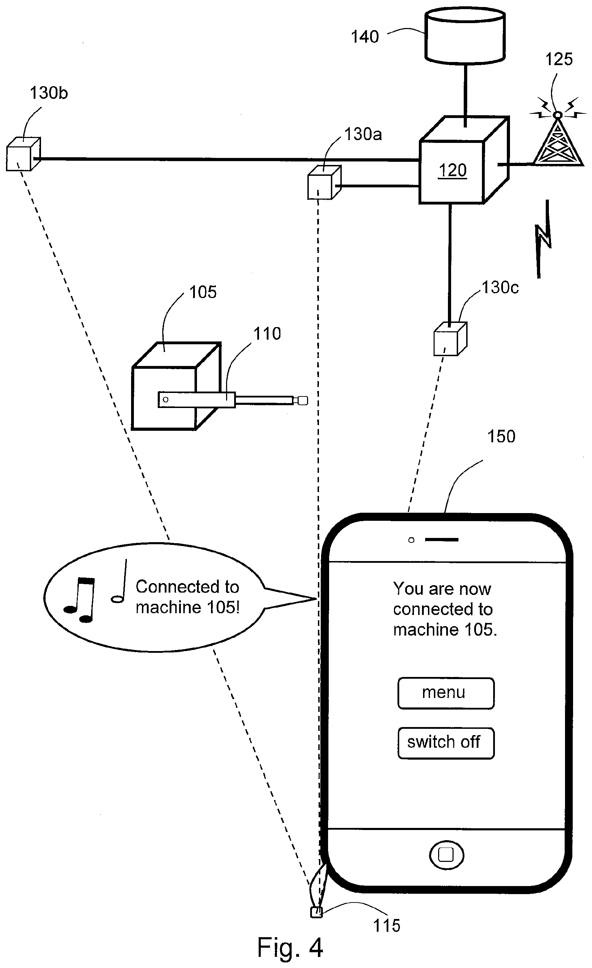

This situation is further illustrated in **Figure 4****.** Thus, a third threshold limit 310c may be defined, wherein the third threshold limit 310c exceeds the second threshold limit 310b and possibly also the first threshold limit 310a. When the distance between the human user 200/ locational device 115 and the agricultural structure 105 is smaller than the third threshold limit 310c, a connection may be made over a wireless communication interface, such as e.g. Bluetooth, ZigBee, infrared transmission, Wi-Fi, Light Fidelity (Li-Fi), ANT+, Near Field Communication (NFC), Z-Wave, Wireless Universal Serial Bus (Wireless USB), etc.

A confirmation of the made connection may be outputted to the human user 200, e.g. on the portable electronic device 150. The human user 200 is thereby informed that he/ she is connected to the agricultural structure 105 and that he/ she may perform various actions influencing the agricultural structure 105.

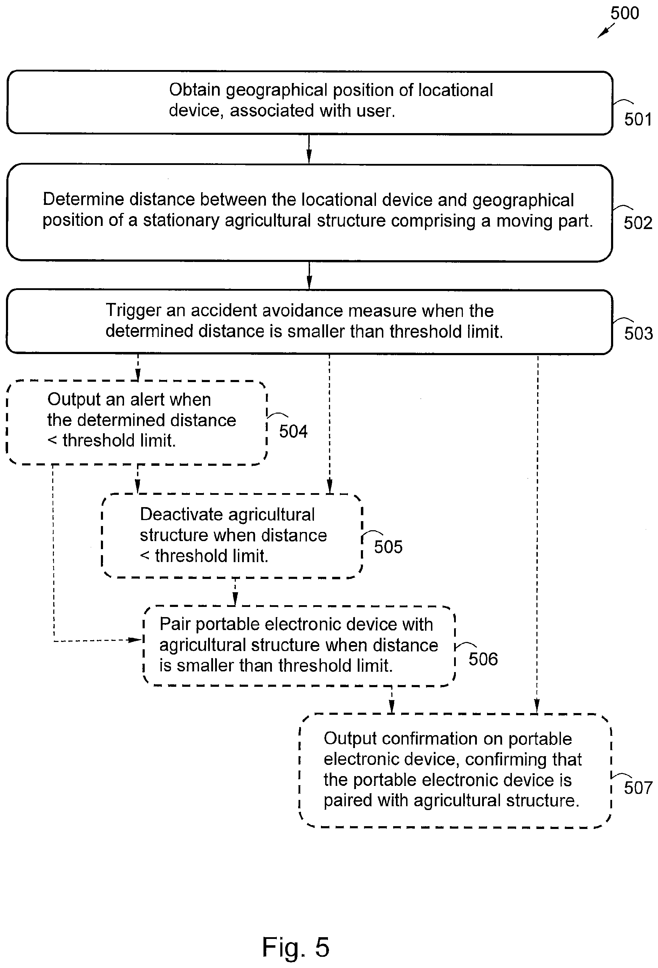

**Figure 5** illustrates an example of a method **500** according to an embodiment. The flow chart in Figure 5 shows the method 500 performed in an agricultural environment 100, to trigger an accident avoidance measure.

The agricultural environment 100 comprises an agricultural structure 105 comprising a moving part 110. The agricultural environment 100 is stationary. The agricultural structure 105 is represented by a milking parlour with a rotating platform.

In order to correctly trigger the accident avoidance measure, the method 500 may comprise a number of steps **501-507.** However, some of these steps 501-507 may be performed solely in some alternative embodiments, like e.g. steps 504- 507. Further, the described steps 501-507 may be performed in a somewhat different chronological order than the numbering suggests; step 502 may for example be performed simultaneously with step 501. The method 500 may comprise the subsequent steps:
**Step 501** comprises obtaining a geographical position of a locational device 115, associated with a human user 200.

The locational device 115 may also be associated with a portable electronic device 150, configured to adjust a parameter of the agricultural structure 105, in some embodiments.

The geographical position of the locational device 115 may be determined in two dimensions, or three dimensions in different embodiments.

**Step 502** comprises determining a distance between the obtained 501 geographical position of the locational device 115 and a geographical position of an agricultural structure 105 comprising a moving part 110.

The locational device identity associated with the locational device 115, and the geographical position of the agricultural structure 105, respectively, may be stored in, and retrieved from a database 140.

The geographical position of the agricultural structure 105 may be stored in the database 140 upon installation in some embodiments. The agricultural structure 105 and/ or the moving part 110 may alternatively comprise a locational device and the control unit 120 may be configured to continuously; upon request by the human user 200 or at predetermined or configurable time interval determine the geographical position of the agricultural structure 105 and/ or the moving part 110.

The position of the locational device 115, and/ or the agricultural structure 105 is determined by a locating algorithm, based on trilateration, multi-lateration, or triangulation in different embodiments.

**Step 503** comprises triggering an accident avoidance measure when the determined 502 distance is smaller than a threshold limit 31 0a, 310b, 310c.

The accident avoidance measure may comprise e.g. emitting an alert, deactivating the moving part 110 of the agricultural structure 105, deactivating the agricultural structure 105, etc.

**Step 504**, which may be performed only in some particular embodiments, wherein the accident avoidance measure comprises outputting an alert for warning the human user 200 when the determined 502 distance is smaller than the threshold limit 310a.

**Step 505**, which may be performed only in some particular embodiments, wherein the accident avoidance measure comprises deactivating the moving part 110 of the agricultural structure 105 when the determined 502 distance is smaller than the threshold limit 310b.

**Step 506**, which may be performed only in some particular embodiments, wherein the accident avoidance measure comprises pairing the portable electronic device 150 with the agricultural structure 105 when the determined 502 distance is smaller than the threshold limit 310c, thereby enabling the portable electronic device 150 to adjust the parameter of the agricultural structure 105.

The agricultural environment 100 may comprise a plurality of agricultural structures 105, which may be operated by the portable electronic device 150. Thanks to enable pairing of the agricultural structure 105 and the portable electronic device 150 only within a certain minimum distance from the agricultural structure 105, it is avoided that the human user 200, when intending to perform operations on a first agricultural structure 105 via the portable electronic device 150, instead perform operations on a second agricultural structure 105, which may cause an accident. Thereby, a more secure working environment is created and accidents may be avoided or at least reduced.

**Step 507**, which may be performed only in some particular embodiments, comprises outputting a confirmation on the portable electronic device 150, confirming that the portable electronic device 150 is paired 506 with the agricultural structure 105.

Thanks to the outputted confirmation, the human user 200 is ascertained that he is enabled to perform operations on the agricultural structure 105.

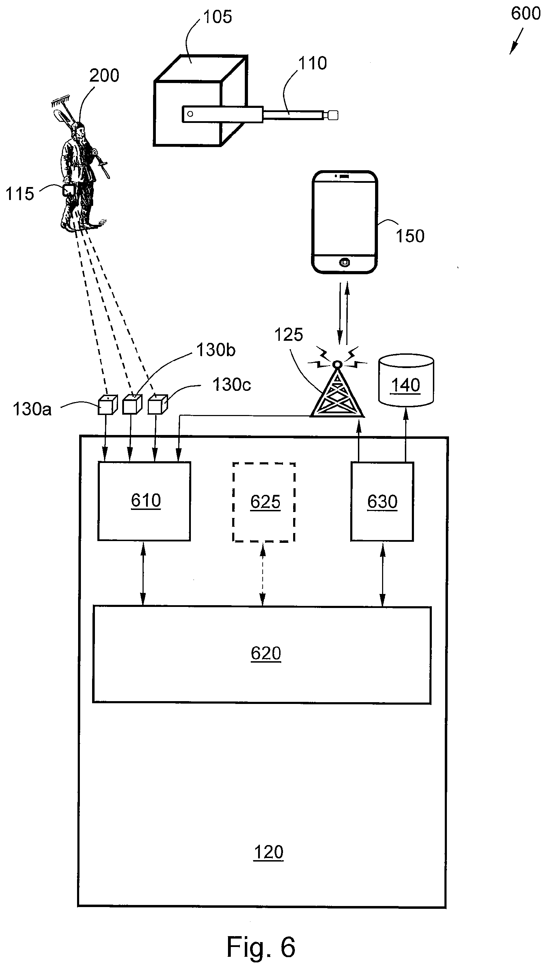

**Figure 6** illustrates an embodiment of a system **600** in an agricultural environment 100. The system 600 may perform at least some of the previously described steps 501-507 according to the method 500 described above and illustrated in Figure 5.

The system 600 comprises an agricultural structure 105 comprising a moving part 110. Further, the system 600 also comprises a locational device 115, associated with a human user 200. Also, the system 600 furthermore comprises a set of wireless signal receivers 130a, 130b, 130c, configured to receive wireless signals from the locational device 115.

The agricultural structure 105 comprising the moving part 110 is represented by a milking parlour with a rotating platform .

The locational device 115 may be associated with a portable electronic device 150 in some embodiments, configured to adjust a parameter of the agricultural structure 105.

The system 600 also comprises a control unit 120. The control unit 120 is configured to obtain geographical position of the locational device 115. Further, the control unit 120 is configured to determine a distance between the geographical position of the locational device 115 and the agricultural structure 105. In addition, the control unit 120 is configured to trigger an accident avoidance measure when the determined distance is smaller than a threshold limit 310a, 310b, 310c.

The control unit 120 in the system 600 may in some embodiments be configured to deactivate the moving part 110 of the agricultural structure 105 when the determined distance is smaller than the threshold limit 310b, when the accident avoidance measure comprises deactivating the agricultural structure 105.

Furthermore, in some embodiments, the control unit 120 of the system 600 may be configured to determine the position of the locational device 115 based on trilateration, multi-lateration, or triangulation.

Also, the control unit 120 of the system 600 may be configured to output a confirmation via the portable electronic device 150, confirming that the portable electronic device 150 is paired with the agricultural structure 105.

The control unit 120 may be configured to pair the portable electronic device 150 with the agricultural structure 105 when the determined distance is smaller than the threshold limit 310c, thereby enabling the portable electronic device 150 to adjust the parameter of the agricultural structure 105.

The control unit 120 may comprise a receiver **610** configured for receiving information from the set of wireless signal receivers 130-1, 130-2, 130-3 and/ or the transceiver 125.

The control unit 120 comprises a processing circuit **620** configured for performing various calculations for conducting the method 500 according to at least some of the previously described steps 501-507.

Such processing circuit 620 may comprise one or more instances of a processing circuit, i.e. a Central Processing Unit (CPU), a processing unit, a processing circuit, a processor, an Application Specific Integrated Circuit (ASIC), a microprocessor, or other processing logic that may interpret and execute instructions. The herein utilised expression "processor" may thus represent a processing circuitry comprising a plurality of processing circuits, such as, e.g., any, some or all of the ones enumerated above.

Furthermore, the control unit 120 may comprise a memory **625** in some embodiments. The optional memory 625 may comprise a physical device utilised to store data or programs, i.e., sequences of instructions, on a temporary or permanent basis. According to some embodiments, the memory 625 may comprise integrated circuits comprising silicon-based transistors. The memory 625 may comprise e.g. a memory card, a flash memory, a USB memory, a hard disc, or another similar volatile or non-volatile storage unit for storing data such as e.g. ROM (Read-Only Memory), PROM (Programmable Read-Only Memory), EPROM (Erasable PROM), EEPROM (Electrically Erasable PROM), etc. in different embodiments.

Further, the control unit 120 may comprise a signal transmitter **630**. The signal transmitter 630 may be configured for transmitting signals via a wired or wireless communication interface to the transceiver 125 and/ or the database 140.

In some alternative embodiments, the system 600 also may comprise an alerting device 210, configured to output an alert when the determined distance is smaller than the threshold limit 310a, 310b, 310c, when the accident avoidance measure comprises output of an alert.

The system 600 may furthermore comprise a database 140 configured to store a locational device identity associated with the locational device 115, and the geographical position of the agricultural structure 105, respectively in some embodiments.

However, in some alternative embodiments, the system 600 may comprise additional units for performing the method 500 according to steps 501-507.

The above described steps 501-507 to be performed in the system 600 may be implemented through the one or more processing circuits 620 within the control unit 120, together with a computer program for performing at least some of the functions of the steps 501-507. Thus, the computer program comprises instructions which, when the computer program is executed by the control unit 120 in the system 600, cause the control unit 120 to carry out the method 500 according to at least some of steps 501-507.

The computer program mentioned above may be provided for instance in the form of a computer-readable medium, i.e. a data carrier carrying computer program code for performing at least some of the steps 501-507 according to some embodiments when being loaded into the one or more processing circuits 620 of the control unit 120. The data carrier may be, e.g., a hard disk, a CD ROM disc, a memory stick, an optical storage device, a magnetic storage device or any other appropriate medium such as a disk or tape that may hold machine readable data in a non-transitory manner. The computer program may furthermore be provided as computer program code on a server and downloaded to the control unit 120 remotely, e.g. over an Internet or an intranet connection.

The terminology used in the description of the embodiments as illustrated in the accompanying drawings is not intended to be limiting of the described method 500; the control unit 120; the computer program; the system 600 and/ or the computer-readable medium. Various changes, substitutions and/ or alterations may be made, without departing from invention embodiments as defined by the appended claims.

As used herein, the term "and/ or" comprises any and all combinations of one or more of the associated listed items. The term "or" as used herein, is to be interpreted as a mathematical OR, i.e., as an inclusive disjunction; not as a mathematical exclusive OR (XOR), unless expressly stated otherwise. In addition, the singular forms "a", "an" and "the" are to be interpreted as "at least one", thus also possibly comprising a plurality of entities of the same kind, unless expressly stated otherwise. It will be further understood that the terms "includes", "comprises", "including" and/ or "comprising", specifies the presence of stated features, actions, integers, steps, operations, elements, and/ or components, but do not preclude the presence or addition of one or more other features, actions, integers, steps, operations, elements, components, and/ or groups thereof. A single unit such as e.g. a processor may fulfil the functions of several items recited in the claims. The mere fact that certain measures or features are recited in mutually different dependent claims, illustrated in different figures or discussed in conjunction with different embodiments does not indicate that a combination of these measures or features cannot be used to advantage. A computer program may be stored/ distributed on a suitable medium, such as an optical storage medium or a solid-state medium supplied together with or as part of other hardware, but may also be distributed in other forms such as via Internet or other wired or wireless communication system.

## Claims

1. A system (600) in an agricultural environment (100); wherein the system (600) comprises:
a stationary agricultural structure (105) comprising a moving part (110), which is represented by a milking parlour with a rotating platform;
a locational device (115), associated with a human user (200) and associated with a portable electronic device (150), configured to adjust a parameter of the stationary agricultural structure (105);
a set of wireless signal receivers (130a, 130b, 130c), configured to receive wireless signals from the locational device (115), the wireless signals being based on Ultra Wideband (UWB) radio technology;
a control unit (120) configured to:
obtain geographical position of the locational device (115); and
determine a distance between the geographical position of the locational device (115) and the stationary agricultural structure (105);
wherein the control unit is configured to:
trigger an accident avoidance measure when the determined distance is smaller than a threshold limit (310a, 310b, 310c), wherein the accident avoidance measure comprises deactivating the moving part (110) of the stationary agricultural structure (105) when the determined distance is smaller than the threshold limit (310b); and
pair the portable electronic device (150) with the stationary agricultural structure (105) when the determined distance is smaller than an additional threshold limit (310c), thereby enabling the portable electronic device (150) to adjust the parameter of the stationary agricultural structure (105).

2. The system (600) according to claim 1, comprising an alerting device (210), configured to output an alert when the determined distance is smaller than the threshold limit (310a, 310b, 310c), when the accident avoidance measure comprises output of an alert.

3. The system (600) according to any of claims 1-2, comprising a database (140) configured to store a locational device identity associated with the locational device (115), and the geographical position of the stationary agricultural structure (105), respectively.

4. The system (600) according to any of claims 1-3, wherein the control unit (120) is configured to determine the position of the locational device (115) based on trilateration, multi-lateration, or triangulation.

5. The system (600) according to any of claims 1 - 4, wherein the control unit (120) is configured to output a confirmation via the portable electronic device (150), confirming that the portable electronic device (150) is paired with the agricultural structure (105).

6. A method (500) in an agricultural environment (100), wherein the method (500) comprises the steps of:
obtaining (501) a geographical position of a locational device (115), associated with a human user (200) and associated with a portable electronic device (150);
wherein said step of obtaining a geographic location of the locational device (115) is determined (503) by a locating algorithm, based on trilateration, multilateration, or triangulation of ultra wide band radio signals received by a set of wireless signal receivers (130a, 130b, 130c), configured to receive wireless signals from the locational device (115).
determining (502) a distance between the obtained (501) geographical position of the locational device (115) and a geographical position of a stationary agricultural structure (105) comprising a moving part (110),
wherein the portable electronic device (150) is configured to adjust a parameter of the stationary agricultural structure (105), the stationary agricultural structure (105) comprising the moving part (110) being represented by a milking parlour with a rotating platform;
triggering (503) an accident avoidance measure when the determined (502) distance is smaller than a threshold limit (310a, 310b, 310c) wherein the accident avoidance measure comprises:
deactivating (505) the moving part (110) of the stationary agricultural structure (105) when the determined (502) distance is smaller than the threshold limit (310b) and pairing (506) the portable electronic device (150) with the stationary agricultural structure (105) when the determined (502) distance is smaller than an additional threshold limit (310c), thereby enabling the portable electronic device (150) to adjust the parameter of the stationary agricultural structure (105).

7. The method (500) according to claim 6, wherein the accident avoidance measure comprises:
outputting (504) an alert for warning the human user (200) when the determined (502) distance is smaller than the threshold limit (310a).

8. The method (500) according to any of claims 6 and 7, wherein a locational device identity associated with the locational device (115), and the geographical position of the stationary agricultural structure (105), respectively, are stored in, and retrieved from a database (140).

9. The method (500) according to any of claims 6-8, wherein the accident avoidance measure comprises:
outputting (507) a confirmation on the portable electronic device (150), confirming that the portable electronic device (150) is paired (506) with the agricultural structure (105).

10. A computer program comprising instructions which, when the computer program is executed by the control unit (120) in the system (600) according to any of claims 1-5, cause the control unit (120) to carry out the method (500) according to any of claims 6-9.

## Patentansprüche

1. System (600) in einer Agrarumgebung (100); wobei das System (600) umfasst:
eine stationäre Agrarstruktur (105), umfassend einen beweglichen Teil (110), der durch einen Melkstand mit einer rotierenden Plattform dargestellt wird;
eine Standortvorrichtung (115), die einem menschlichen Benutzer (200) zugeordnet ist und einer tragbaren elektronischen Vorrichtung (150) zugeordnet ist, die konfiguriert ist, um einen Parameter der stationären Agrarstruktur (105) einzustellen;
einen Satz von drahtlosen Signalempfängern (130a, 130b, 130c), die konfiguriert sind, um drahtlose Signale von der Standortvorrichtung (115) zu empfangen, wobei die drahtlosen Signale auf Ultrabreitband-Funktechnologie (UWB-Funktechnologie) basieren;
eine Steuereinheit (120), die konfiguriert ist zum:
Erhalten einer geografischen Position der Standortvorrichtung (115); und
Bestimmen eines Abstands zwischen der geografischen Position der Standortvorrichtung (115) und der stationären Agrarstruktur (105);
wobei die Steuereinheit konfiguriert ist, zum:
Auslösen einer Unfallvermeidungsmaßnahme, wenn der bestimmte Abstand kleiner als ein Grenzwert (310a, 310b, 310c) ist, wobei die Unfallvermeidungsmaßnahme ein Deaktivieren des beweglichen Teils (110) der stationären Agrarstruktur (105) umfasst, wenn der bestimmte Abstand kleiner als der Grenzwert (310b) ist; und
Paaren der tragbaren elektronischen Vorrichtung (150) mit der stationären Agrarstruktur (105), wenn der bestimmte Abstand kleiner als ein zusätzlicher Grenzwert (310c) ist, wodurch die tragbare elektronische Vorrichtung (150) aktiviert wird, um den Parameter der stationären Agrarstruktur (105) einzustellen.

2. System (600) nach Anspruch 1, umfassend eine Warnvorrichtung (210), die konfiguriert ist, um eine Warnung auszugeben, wenn der bestimmte Abstand kleiner als der Grenzwert (310a, 310b, 310c) ist, wenn die Unfallvermeidungsmaßnahme eine Ausgabe einer Warnung umfasst.

3. System (600) nach einem der Ansprüche 1 bis 2, umfassend eine Datenbank (140), die konfiguriert ist, um eine Standortvorrichtungsidentität zu speichern, die der Standortvorrichtung (115) beziehungsweise der geografischen Position der stationären Agrarstruktur (105) zugeordnet ist.

4. System (600) nach einem der Ansprüche 1 bis 3, wobei die Steuereinheit (120) konfiguriert ist, um die Position der Standortvorrichtung (115) basierend auf Trilateration, Multilateration oder Triangulation zu bestimmen.

5. System (600) nach einem der Ansprüche 1 bis 4, wobei die Steuereinheit (120) konfiguriert ist, um eine Bestätigung über die tragbare elektronische Vorrichtung (150) auszugeben, die bestätigt, dass die tragbare elektronische Vorrichtung (150) mit der Agrarstruktur (105) gekoppelt ist.

6. Verfahren (500) in einer Agrarumgebung (100), wobei das Verfahren (500) die Schritte umfasst:
Erhalten (501) einer geografischen Position einer Standortvorrichtung (115), die einem menschlichen Benutzer (200) zugeordnet ist und einer tragbaren elektronischen Vorrichtung (150) zugeordnet ist;
wobei der Schritt des Erhaltens eines geografischen Standorts der Standortvorrichtung (115) durch einen Ortungsalgorithmus bestimmt wird (503), basierend auf Trilateration, Multilateration oder Triangulation von Ultrabreitband-Funksignalen, die durch einen Satz von drahtlosen Signalempfängern (130a, 130b, 130c) empfangen werden, die konfiguriert sind, um drahtlose Signale von der Standortvorrichtung (115) zu empfangen.
Bestimmen (502) eines Abstands zwischen der erhaltenen (501) geografischen Position der Standortvorrichtung (115) und einer geografischen Position einer stationären Agrarstruktur (105), umfassend einen beweglichen Teil (110),
wobei die tragbare elektronische Vorrichtung (150) konfiguriert ist, um einen Parameter der stationären Agrarstruktur (105) einzustellen, die stationäre Agrarstruktur (105) umfassend den beweglichen Teil (110), der durch einen Melkstand mit einer rotierenden Plattform dargestellt wird;
Auslösen (503) einer Unfallvermeidungsmaßnahme, wenn der bestimmte (502) Abstand kleiner als ein Grenzwert (310a, 310b, 310c) ist, wobei die Unfallvermeidungsmaßnahme umfasst:
Deaktivieren (505) des beweglichen Teils (110) der stationären Agrarstruktur (105), wenn der bestimmte (502) Abstand kleiner als der Grenzwert (310b) ist, und Paaren (506) der tragbaren elektronischen Vorrichtung (150) mit der stationären Agrarstruktur (105), wenn der bestimmte (502) Abstand kleiner als ein zusätzlicher Grenzwert (310c) ist, wodurch die tragbare elektronische Vorrichtung (150) aktiviert wird, um den Parameter der stationären Agrarstruktur (105) einzustellen.

7. Verfahren (500) nach Anspruch 6, wobei die Unfallvermeidungsmaßnahme umfasst:
Ausgeben (504) einer Warnung zum Warnen des menschlichen Benutzers (200), wenn der bestimmte (502) Abstand kleiner als der Grenzwert (310a) ist.

8. Verfahren (500) nach einem der Ansprüche 6 und 7, wobei eine Standortvorrichtungsidentität, die der Standortvorrichtung (115) beziehungsweise der geografischen Position der stationären Agrarstruktur (105) zugeordnet ist, in einer Datenbank (140) gespeichert und aus dieser abgerufen wird.

9. Verfahren (500) nach einem der Ansprüche 6 bis 8, wobei die Unfallvermeidungsmaßnahme umfasst:
Ausgeben (507) einer Bestätigung auf der tragbaren elektronischen Vorrichtung (150), die bestätigt, dass die tragbare elektronische Vorrichtung (150) mit der Agrarstruktur (105) gepaart (506) ist.

10. Computerprogramm, umfassend Anweisungen, die, wenn das Computerprogramm durch die Steuereinheit (120) in dem System (600) nach einem der Ansprüche 1 bis 5 ausgeführt wird, bewirken, dass die Steuereinheit (120) das Verfahren (500) nach einem der Ansprüche 6 bis 9 vornimmt.

## Revendications

1. Système (600) dans un environnement agricole (100) ; dans lequel le système (600) comprend :
une structure agricole fixe (105) comprenant une partie mobile (110), qui est représentée par une salle de traite avec une plate-forme rotative ;
un dispositif de localisation (115), associé à un utilisateur humain (200) et associé à un dispositif électronique portable (150), configuré pour ajuster un paramètre de la structure agricole fixe (105) ;
un ensemble de récepteurs de signaux sans fil (130a, 130b, 130c), configurés pour recevoir des signaux sans fil en provenance du dispositif de localisation (115), les signaux sans fil étant basés sur une technologie radio à bande ultra large (UWB) ;
une unité de commande (120) configurée pour :
obtenir une position géographique du dispositif de localisation (115) ; et
déterminer une distance entre la position géographique du dispositif de localisation (115) et la structure agricole fixe (105) ;
dans lequel l'unité de commande est configurée pour :
déclencher une mesure d'évitement d'accident lorsque la distance déterminée est plus petite qu'une limite seuil (310a, 310b, 310c), dans lequel la mesure d'évitement d'accident comprend la désactivation de la partie mobile (110) de la structure agricole fixe (105) lorsque la distance déterminée est plus petite que la limite seuil (310b) ; et
apparier le dispositif électronique portable (150) à la structure agricole fixe (105) lorsque la distance déterminée est plus petite qu'une limite seuil supplémentaire (310c), ce qui permet au dispositif électronique portable (150) d'ajuster le paramètre de la structure agricole fixe (105).

2. Système (600) selon la revendication 1, comprenant un dispositif d'alerte (210), configuré pour émettre une alerte lorsque la distance déterminée est plus petite que la limite seuil (310a, 310b, 310c), lorsque la mesure d'évitement d'accident comprend l'émission d'une alerte.

3. Système (600) selon l'une quelconque des revendications 1 à 2, comprenant une base de données (140) configurée pour stocker une identité de dispositif de localisation associée au dispositif de localisation (115), et la position géographique de la structure agricole fixe (105), respectivement.

4. Système (600) selon l'une quelconque des revendications 1 à 3, dans lequel l'unité de commande (120) est configurée pour déterminer la position du dispositif de localisation (115) sur la base d'une trilatération, d'une multilatération ou d'une triangulation.

5. Système (600) selon l'une quelconque des revendications 1 à 4, dans lequel l'unité de commande (120) est configurée pour émettre une confirmation par l'intermédiaire du dispositif électronique portable (150), confirmant que le dispositif électronique portable (150) est appairé avec la structure agricole (105).

6. Procédé (500) dans un environnement agricole (100), dans lequel le procédé (500) comprend les étapes consistant à :
obtenir (501) une position géographique d'un dispositif de localisation (115), associé à un utilisateur humain (200) et associé à un dispositif électronique portable (150) ;
dans lequel ladite étape consistant à obtenir un emplacement géographique du dispositif de localisation (115) est déterminée (503) par un algorithme de localisation, sur la base d'une trilatération, d'une multilatération ou d'une triangulation de signaux radio à bande ultra large reçus par un ensemble de récepteurs de signaux sans fil (130a, 130b, 130c), configurés pour recevoir des signaux sans fil en provenance du dispositif de localisation (115).
déterminer (502) une distance entre la position géographique obtenue (501) du dispositif de localisation (115) et une position géographique d'une structure agricole fixe (105) comprenant une partie mobile (110),
dans lequel le dispositif électronique portable (150) est configuré pour ajuster un paramètre de la structure agricole fixe (105), la structure agricole fixe (105) comprenant la partie mobile (110) étant représentée par une salle de traite avec une plate-forme rotative ;
déclencher (503) une mesure d'évitement d'accident lorsque la distance déterminée (502) est plus petite qu'une limite seuil (310a, 310b, 310c), dans lequel la mesure d'évitement d'accident comprend :
la désactivation (505) de la partie mobile (110) de la structure agricole fixe (105) lorsque la distance déterminée (502) est plus petite que la limite seuil (310b) et l'appairage (506) du dispositif électronique portable (150) à la structure agricole fixe (105) lorsque la distance déterminée (502) est plus petite qu'une limite seuil supplémentaire (310c), ce qui permet au dispositif électronique portable (150) d'ajuster le paramètre de la structure agricole fixe (105).

7. Procédé (500) selon la revendication 6, dans lequel la mesure d'évitement d'accident comprend :
l'émission (504) d'une alerte pour avertir l'utilisateur humain (200) lorsque la distance déterminée (502) est plus petite que la limite seuil (310a).

8. Procédé (500) selon l'une quelconque des revendications 6 et 7, dans lequel une identité de dispositif de localisation associée au dispositif de localisation (115), et la position géographique de la structure agricole fixe (105), respectivement, sont stockées dans, et récupérées depuis une base de données (140).

9. Procédé (500) selon l'une quelconque des revendications 6 à 8, dans lequel la mesure d'évitement d'accident comprend :
l'émission (507) d'une confirmation sur le dispositif électronique portable (150), confirmant que le dispositif électronique portable (150) est apparié (506) à la structure agricole (105).

10. Programme informatique comprenant des instructions qui, lorsque le programme informatique est exécuté par l'unité de commande (120) dans le système (600) selon l'une quelconque des revendications 1 à 5, amènent l'unité de commande (120) à exécuter le procédé (500) selon l'une quelconque des revendications 6 à 9.
